# EUROPEAN PATENT APPLICATION

(11) **EP 4 729 185 A1**
(43) Date of publication of application: **22.04.2026**
(21) Application number: 23944929.1
(22) Date of filing: 30.11.2023
(51) Int. Cl.: B05C 5/02

(54) **COATING DIE HEAD AND ELECTRODE SHEET COATING DEVICE**

(30) Priority: 10.07.2023 CN 202321793656 U
(71) Applicant: Contemporary Amperex Technology Co., Limited, Ningde, Fujian 352100 (CN)
(72) Inventor: ZHAN, Bingyang, Ningde, Fujian 352100 (CN); ZHANG, Jingdong, Ningde, Fujian 352100 (CN)
(74) Representative: Kraus & Lederer PartGmbB
(86) International application number: PCT/CN2023/135561
(87) International publication number: WO 2025/010923

(57) **Abstract**

The present application provides a coating die and an electrode plate coating device, where the coating die is provided with an inlet, a first distribution cavity, a plurality of distribution channels, and a plurality of coating outlets. The plurality of coating outlets are spaced apart along a first direction. Each distribution channel is provided with an inlet port and an outlet port at two respective ends thereof. The inlet port is in communication with the inlet, each outlet port is oriented toward a corresponding coating outlet, and cross-sectional areas of the inlet ports of all of the plurality of distribution channels are equal. Since the cross-sectional areas of all the inlet ports of the distribution channels are equal and the outlet port of each distribution channel corresponds to a respective coating outlet, the slurry can be evenly distributed and guided to the plurality of coating outlets under the action of the distribution channels, reducing the problem of uneven slurry amounts obtained by the coating outlets during free flow, which facilitates improving the consistency of discharge from the plurality of coating outlets and enhances the uniformity of slurry coating in the coating process.

## Description

### CROSS-REFERENCE TO RELATED APPLICATIONS

The present application claims priority to Chinese Patent Application No. 202321793656.4, filed on July 10, 2023 and entitled "COATING DIE AND ELECTRODE PLATE COATING DEVICE", which is incorporated herein by reference in its entirety.

### TECHNICAL FIELD

The present application relates to the technical field of battery production, and more particularly, to a coating die and an electrode plate coating device.

### BACKGROUND

Batteries have advantages such as high specific energy and high power density, and are widely used in electronic devices, such as mobile phones, laptops, electric bicycles, electric vehicles, electric airplanes, electric ships, electric toy cars, electric toy ships, electric toy airplanes, and electric tools, and the like.

The coating process, as an important process in battery production, has a significant impact on battery quality. Improving the uniformity of slurry coating in the coating process has been a key research direction for those skilled in the art.

### SUMMARY

In view of the above problems, the present application provides a coating die and an electrode plate coating device, where the coating die can improve the uniformity of slurry coating in the coating process.

According to a first aspect, some embodiments of the present application provide a coating die, where the coating die is provided with an inlet, a first distribution cavity, a plurality of distribution channels, and a plurality of coating outlets, the plurality of coating outlets being spaced apart along a first direction; each distribution channel is provided with an inlet port and an outlet port at two respective ends thereof, the inlet port being in communication with the inlet and each outlet port being oriented toward a corresponding coating outlet and in communication with the corresponding coating outlet through the first distribution cavity; and cross-sectional areas of all the inlet ports of the plurality of distribution channels are equal.

Since the cross-sectional areas of the inlet ports of all the distribution channels are equal and the outlet port of each distribution channel corresponds to a respective coating outlet, the slurry can be evenly distributed and guided to the plurality of coating outlets under the action of the distribution channels, reducing the problem of uneven slurry amounts obtained by the coating outlets during free flow, which facilitates improving the consistency of discharge from the plurality of coating outlets and enhances the uniformity of slurry coating in the coating process.

According to the coating die provided in some embodiments of the present application, the distribution channel includes at least two sub-distribution channels, where the cross-sectional areas of all of the at least two sub-distribution channels at the inlet port are equal, such that the slurry is less likely to disperse during flow from the outlet port to the coating outlet, which facilitates improving the correspondence between the outlet port of each distribution channel and the coating outlet, so that the slurry obtained by the coating outlet comes as much as possible from the corresponding distribution channel.

According to the coating die provided in some embodiments of the present application, the coating die includes a first die, a second die, and a plurality of first distribution plates, the first die being provided with a flow cavity in communication with the inlet, the second die covering the flow cavity, and the plurality of first distribution plates being spaced apart in the flow cavity to form the distribution channels in communication with the coating outlets.

According to the coating die provided in some embodiments of the present application, the coating die further includes a second distribution plate, the second distribution plate being disposed in the flow cavity, and at least one second distribution plate disposed between two adjacent first distribution plates to divide the distribution channel into at least two sub-distribution channels.

According to the coating die provided in some embodiments of the present application, the flow cavity includes a first chamber and a feed cavity in communication with the first chamber, the inlet being located at an end of the feed cavity away from the first chamber, the first distribution plate extending from the feed cavity into the first chamber, the inlet port being located in the feed cavity, and the outlet port being located in the first chamber, such that a portion of the first distribution plate is disposed in the feed cavity and another portion is disposed in the first chamber, the first distribution plate extending through the feed cavity and the first chamber, resulting in a longer path for the first distribution plate to act on the slurry, providing a stronger guiding effect.

According to the coating die provided in some embodiments of the present application, the coating die further includes a pressure bar, the pressure bar being connected to the second die and disposed in the first chamber, the pressure bar being spaced apart from at least a portion of an inner wall of the first chamber, a portion of the first distribution plate extending into the first chamber being disposed between the pressure bar and the inner wall of the first chamber, a portion of a gap between the pressure bar and the inner wall of the first chamber forming the first distribution cavity in communication with the plurality of coating outlets, and the first distribution cavity being in communication with the outlet ports of the distribution channels. The first distribution cavity is not only capable of communicating with the plurality of coating outlets but also capable of temporarily storing the slurry, which facilitates stabilizing the pressure of the slurry, making the slurry output more uniform and stable.

According to the coating die provided in some embodiments of the present application, the first die is provided with a second chamber, the second chamber being spaced apart from the first chamber, the second die covering the second chamber to form a second distribution cavity, and the second distribution cavity being in communication with the plurality of coating outlets. The second distribution cavity is capable of temporarily storing the slurry flowing to the coating outlets, which facilitates making the slurry output more uniform and stable.

According to the coating die provided in some embodiments of the present application, the coating die further includes a first adjustment rod and a second adjustment rod, the first adjustment rod being connected to the first die, the second adjustment rod being connected to the second die, and the first adjustment rod and the second adjustment rod being configured to adjust opening sizes of the coating outlets to achieve adjustment of the slurry coating weight by the coating die.

According to the coating die provided in some embodiments of the present application, the coating die further includes a gasket, the gasket being provided with a plurality of notches spaced apart along the first direction, the gasket being sandwiched between the first die and the second die, and all of the plurality of notches being in communication with the first distribution cavity to form the coating outlets.

According to the coating die provided in some embodiments of the present application, the first chamber and the pressure bar both extend along the first direction, such that the first distribution cavity can conveniently communicate with the coating outlets spaced apart along the first direction.

According to the coating die provided in some embodiments of the present application, where a plurality of first adjustment rods are provided, the plurality of first adjustment rods being spaced apart along the first direction; and a plurality of second adjustment rods are provided, the plurality of second adjustment rods being spaced apart along the first direction, such that an operator can independently adjust each of the opening sizes of the plurality of coating outlets spaced apart along the first direction, allowing flexible adjustment of the weight of the slurry coated by the coating outlets.

According to the coating die provided in some embodiments of the present application, the coating die further includes a connector, the gasket being provided with a through-hole and the pressure bar being fixed to the second die by the connector passing through the through-hole.

According to a second aspect, some embodiments of the present application further provide an electrode plate coating device, the electrode plate coating device including the coating die provided in any of the above technical solutions and the coating die being configured to coat slurry onto a surface of an electrode plate.

The technical solutions provided in the embodiments of the present disclosure bring at least the following beneficial effects:

The present application provides a coating die, where the coating die includes an inlet, a first distribution cavity, a plurality of distribution channels, and a plurality of coating outlets, the plurality of coating outlets being spaced apart along a first direction, each distribution channel is provided with an inlet port and an outlet port at two respective ends thereof, the inlet port being in communication with the inlet, each outlet port being oriented toward a corresponding coating outlet, and cross-sectional areas of the inlet ports of all of the plurality of distribution channels being equal. Since the cross-sectional areas of the inlet ports of all the distribution channels are equal and the outlet port of each distribution channel corresponds to a respective coating outlet, the slurry can be evenly distributed and guided to the plurality of coating outlets under the action of the distribution channels, reducing the problem of uneven slurry amounts obtained by the coating outlets during free flow, which facilitates improving the consistency of discharge from the plurality of coating outlets and enhances the uniformity of slurry coating in the coating process.

The above description is only an overview of the technical solutions of the present application. To enable a clearer understanding of the technical means of the present application, it can be implemented in accordance with the contents of the description, and to make the above and other objectives, features, and advantages of the present application more apparent and understandable, specific embodiments of the present application are provided below.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered a limitation of the present application. Throughout the drawings, identical components are denoted by identical reference symbols. In the drawings:
FIG. 1 is a perspective view of a coating die provided in some embodiments of the present application;
FIG. 2 is a cross-sectional view at A in FIG. 1;
FIG. 3 is a cross-sectional view of a first die provided in some embodiments of the present application;
FIG. 4 is a schematic structural diagram of a first die provided in some embodiments of the present application;
FIG. 5 is an enlarged view at C in FIG. 4;
FIG. 6 is a cross-sectional view at B in FIG. 1;
FIG. 7 is a schematic structural diagram of a first die and a pressure bar provided in some embodiments of the present application;
FIG. 8 is a schematic structural diagram of a portion of a coating die provided in some embodiments of the present application;
FIG. 9 is a schematic structural diagram of a coating die provided in some embodiments of the present application; and
FIG. 10 is an enlarged view at D in FIG. 9.

Reference signs in the detailed description of embodiments are as follows:
11, first die; 110, inlet; 111, flow cavity; 1110, distribution channel; 11101, sub-distribution channel; 1111, inlet port; 1112, outlet port; 112, first chamber; 1121, inner wall surface; 1120, first distribution cavity; 113, feed cavity; 114, second chamber; 1140, second distribution cavity; 12, second die; 13, pressure bar; 14, gasket; 141, notch; 142, through-hole; 1410, coating outlet; 15, connector; 16, first adjustment rod; 17, second adjustment rod; 18, first distribution plate; 19, second distribution plate; X, first direction; Y, second direction; and Z, third direction.

### DESCRIPTION OF EMBODIMENTS

The embodiments of the technical solutions of the present application will be described in detail below with reference to the accompanying drawings. The following embodiments are only used to illustrate the technical solutions of the present application more clearly and are therefore merely examples, and should not be construed as limiting the scope of protection of the present application.

It should be noted that, unless otherwise stated, technical or scientific terms used in the embodiments of the present application shall have the ordinary meanings understood by those skilled in the art to which the embodiments of the present application pertain.

In the description of the embodiments of the present application, technical terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings, and are only for the convenience of describing the embodiments of the present application and simplifying the description, rather than indicating or implying that the device or element referred to must have a specific orientation, be constructed, and operate in a specific orientation, and therefore should not be construed as limiting the embodiments of the present application.

Furthermore, technical terms such as "first", "second", and the like are used for descriptive purposes only and should not be understood as indicating or implying relative importance or implying the number of technical features indicated. In the description of the embodiments of the present application, "a plurality of" means two or more, unless otherwise specifically defined.

In the description of the embodiments of the present application, unless otherwise expressly specified and limited, technical terms such as "install", "connect", "connection", "fix", and the like should be understood in a broad sense, for example, as a fixed connection, a detachable connection, or an integral connection; a mechanical connection or an electrical connection; a direct connection or an indirect connection through an intermediary; or communication within two elements or an interaction relationship between two elements. For those of ordinary skill in the art, the specific meanings of the above terms in the embodiments of the present application can be understood according to specific circumstances.

In the description of the embodiments of the present application, unless otherwise expressly specified and limited, a first feature being "on" or "under" a second feature may mean direct contact between the first and second features, or indirect contact through an intermediary. Moreover, a first feature being "above", "over", or "on top of" a second feature may mean that the first feature is directly above or obliquely above the second feature, or simply that the first feature is at a higher level than the second feature. A first feature being "below", "under", or "beneath" a second feature may mean that the first feature is directly below or obliquely below the second feature, or simply that the first feature is at a lower level than the second feature.

Currently, with the development of market trends, the application of batteries is becoming increasingly widespread. Batteries are not only used in energy storage systems such as hydropower, thermal power, wind power, and solar power plants, but also widely applied in electric vehicles such as electric bicycles, electric motorcycles, and electric cars, as well as in military equipment, aerospace, and other fields.

Coating is an essential process in battery production, and the coating process has a significant impact on battery quality, directly affecting key performance indicators such as safety, capacity, and lifespan. Coating is a method of applying pasty polymers, molten polymers, or polymer melts onto paper, cloth, or plastic films to produce composite materials (films). In the coating process for electrode plates, the coating die applies slurry onto the surface of the electrode plate to achieve good electrical properties.

Currently, when coating electrode plates using a coating die, to improve coating efficiency, the coating die typically includes multiple coating outlets to enable simultaneous coating at multiple locations on the electrode plate. However, due to the varying distances between the multiple coating outlets on the coating die and the inlet of the slurry, influenced by the flow inertia of the slurry from the inlet and the pressure loss of the slurry at locations farther from the inlet, the slurry flow rate at coating outlets closer to the inlet is greater than the slurry flow rate at coating outlets farther from the inlet. This results in different coating weights at different locations on the electrode plate surface, reducing the consistency of the electrode plate and hindering improvements in electrode plate quality.

To improve the uniformity of slurry coating in the coating process, embodiments of the present application provide a coating die, where the coating die includes an inlet, a plurality of distribution channels, and a plurality of coating outlets, the plurality of coating outlets being spaced apart along a first direction; each distribution channel is provided with an inlet port and an outlet port at two respective ends thereof, the inlet port being in communication with the inlet and the outlet port corresponding to a respective coating outlet; and cross-sectional areas of all the inlet ports of the plurality of distribution channels being equal. Since the cross-sectional areas of the inlet ports of all the distribution channels are equal and the outlet port of each distribution channel corresponds to a respective coating outlet, the slurry can be evenly distributed and guided to the plurality of coating outlets under the action of the distribution channels, reducing the problem of uneven flow rates during free flow of the slurry, which facilitates improving the consistency of discharge from the plurality of coating outlets and enhances the uniformity of slurry coating in the coating process.

The coating die disclosed in the embodiments of the present application can be used, but is not limited to, for coating electrode plates, and can also be used for coating other films such as paper, cloth, or plastic films to obtain composite materials (films) with certain properties.

The technical solutions of the coating die and the electrode plate coating device provided in specific embodiments of the present application are further described below.

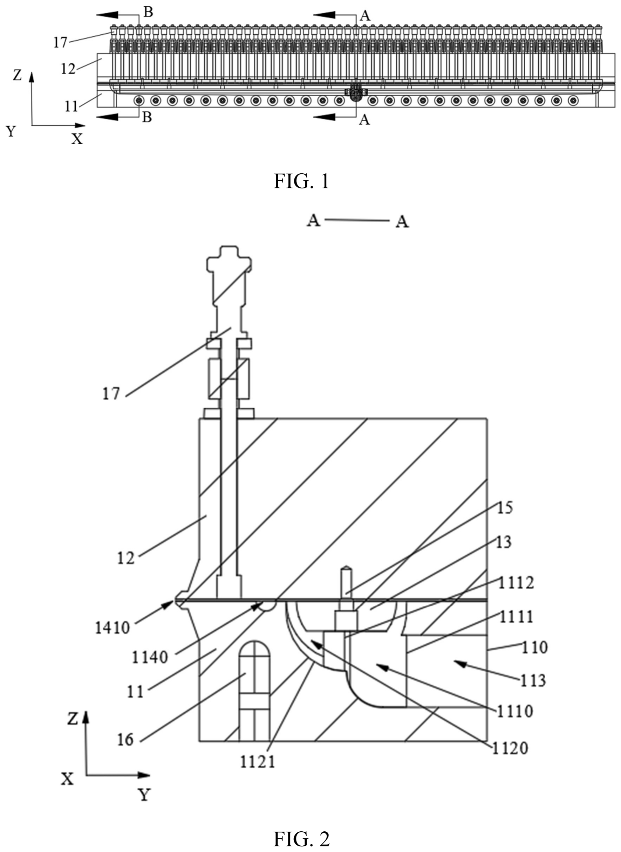

As shown in FIG. 1, some embodiments of the present application provide a coating die. As shown in FIG. 2, the coating die is provided with an inlet 110, a first distribution cavity 1120, a plurality of distribution channels 1110, and a plurality of coating outlets 1410, the plurality of coating outlets 1410 being spaced apart along a first direction X; each distribution channel 1110 is provided with an inlet port 1111 and an outlet port 1112 at two respective ends thereof, the inlet port 1111 being in communication with the inlet 110 and each outlet port 1112 being oriented toward a corresponding coating outlet 1410 and in communication with the corresponding coating outlet 1410 through the first distribution cavity 1120; and cross-sectional areas of all the inlet ports 1111 of the plurality of distribution channels 1110 are equal.

For example, the coating die may be a component in a coating device that applies slurry onto the surface of an electrode plate during the coating process. After the slurry is introduced into the coating die, it is simultaneously applied to multiple locations on the electrode plate under the action of the coating die, achieving efficient coating on the electrode plate.

The inlet 110 may be a slurry entrance provided on the coating die, capable of communicating with the outside, and is used to allow slurry to enter the coating die. The coating outlet 1410 may be an opening structure provided on the coating die, used for slurry outflow to enable coating of the slurry onto the electrode plate surface. A plurality of coating outlets 1410 are provided, spaced apart along the first direction X, allowing the coating die to simultaneously coat multiple locations on the electrode plate along the first direction X, which facilitates improving the coating efficiency of the coating die.

The distribution channel 1110 may be a channel used to connect the coating outlet 1410 to the inlet 110. By providing a plurality of distribution channels 1110 on the coating die, the plurality of distribution channels 1110 respectively connect the plurality of coating outlets 1410 to the inlet 110, enabling the slurry flowing in from the inlet 110 to flow to the plurality of coating outlets 1410. For example, the number of distribution channels 1110 is set to be equal to the number of coating outlets 1410, with each distribution channel 1110 corresponding to one coating outlet 1410, such that the distribution channels 1110 correspond one-to-one with the coating outlets 1410.

The inlet port 1111 and the outlet port 1112 refer to the ports at the two ends of the distribution channel 1110, enabling the slurry to enter and flow out of the distribution channel 1110 smoothly. The inlet port 1111 may be in communication with the inlet 110 and is the port in the distribution channel 1110 through which the slurry flows in; the outlet port 1112 may be spaced apart from the inlet port, with the cavity of the distribution channel 1110 between the inlet port and the outlet port. By configuring the outlet port 1112 to correspond to a respective coating outlet 1410, the slurry flowing out of the distribution channel 1110 can be guided toward the coating outlet 1410 under the guiding action of the outlet port 1112.

The first distribution cavity 1120 may be a cavity structure capable of temporarily storing slurry and stabilizing the pressure of the slurry, facilitating a more uniform and stable slurry output. The first distribution cavity 1120, by being in communication between the outlet port 1112 and the corresponding coating outlet 1410, allows the slurry to pass through the first distribution cavity 1120 before entering the coating outlet 1410, which facilitates improving the stability of the slurry flowing out of the coating outlet 1410.

By setting the cross-sectional areas of the inlet ports 1111 of the plurality of distribution channels 1110 to be equal, the slurry can be evenly distributed into the plurality of distribution channels 1110 when introduced from the inlet 110, resulting in equal slurry flow rates in all the distribution channels 1110. Additionally, since the outlet port 1112 of a distribution channel 1110 corresponds to a respective coating outlet 1410, the slurry obtained by each coating outlet 1410 is guided and evenly distributed by the distribution channel 1110, improving the uniformity of the slurry amounts obtained by all the coating outlets 1410.

Since the cross-sectional areas of the inlet ports 1111 of all the distribution channels 1110 are equal and the outlet port 1112 of each distribution channel 1110 corresponds to a respective coating outlet 1410, the slurry can be evenly distributed and guided to the plurality of coating outlets 1410 under the action of the distribution channels 1110, reducing the problem of uneven slurry amounts obtained by each coating outlet 1410 during free flow, which facilitates improving the consistency of discharge from the plurality of coating outlets 1410 and enhances the uniformity of slurry coating in the coating process.

In some embodiments, the distribution channel 1110 includes at least two sub-distribution channels 11101, the cross-sectional areas of all of the at least two sub-distribution channels 11101 at the inlet port 1111 being equal.

The sub-distribution channel 11101 may be formed by dividing the distribution channel 1110. By dividing the distribution channel 1110 into at least two sub-distribution channels 11101, the slurry flowing in the distribution channel 1110 can be divided into at least two flow layers, enabling better guidance of the slurry, making the slurry less likely to disperse during flow from the outlet port 1112 to the coating outlet 1410, which facilitates improving the correspondence between the outlet port 1112 of each distribution channel 1110 and the coating outlet 1410, so that the slurry obtained by the coating outlet 1410 comes as much as possible from the corresponding distribution channel 1110.

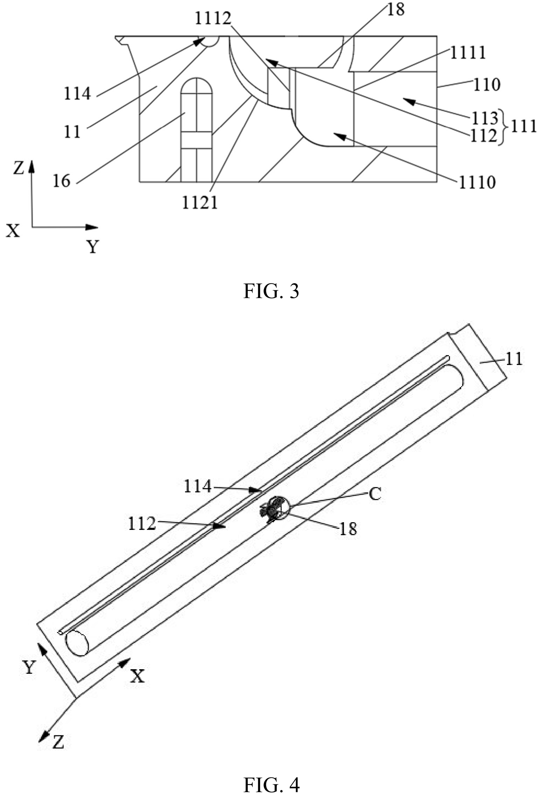

In some embodiments, as shown in FIG. 3, the coating die includes a first die 11, a second die 12, and a plurality of first distribution plates 18, the first die 11 being provided with a flow cavity 111 in communication with the inlet 110, the second die 12 covering the flow cavity 111, and the plurality of first distribution plates 18 being spaced apart in the flow cavity 111 to form the distribution channels 1110 in communication with the coating outlets 1410.

The first die 11 and the second die 12 may both be components of the coating die, which are connected to form the coating die while also forming structures such as the coating outlets 1410 in the coating die. For example, the first die 11 may be snap-connected to the second die 12 along a third direction Z perpendicular to the first direction X, facilitating the connection between the first die 11 and the second die 12.

The flow cavity 111 may be a cavity structure provided on the first die 11, in communication with the inlet 110 and extending along the extension direction of the first die 11, enabling the slurry introduced through the inlet 110 to flow into the interior of the first die 11.

As shown in FIG. 4, the first distribution plate 18 may be a plate-like component disposed in the flow cavity 111 to divide the slurry flowing through the flow cavity 111. By spacing a plurality of first distribution plates 18 in the flow cavity 111 and covering the flow cavity 111 with the second die 12, the flow cavity 111 is divided into a plurality of distribution channels 1110, which evenly distribute and guide the slurry flowing through the flow cavity 111 to the plurality of coating outlets 1410, enabling even distribution of the slurry to the plurality of coating outlets 1410.

For example, the first distribution plate 18 may be a plate-like component with a bent structure. By bending the first distribution plate 18, the inlet port 1111 of the distribution channel 1110 formed by the first distribution plate 18 can be oriented toward the corresponding coating outlet 1410, enabling the first distribution plate 18 to guide the slurry flowing out from the inlet port 1111 of the distribution channel 1110 to the corresponding coating outlet 1410.

For example, a thickness range of the first distribution plate 18 may be from 0.2 mm to 1.2 mm. In some embodiments, the thickness range of the first distribution plate 18 may be from 0.3 mm to 1 mm, for example, the thickness of the first distribution plate 18 may be 0.5 mm, enabling effective distribution of the slurry.

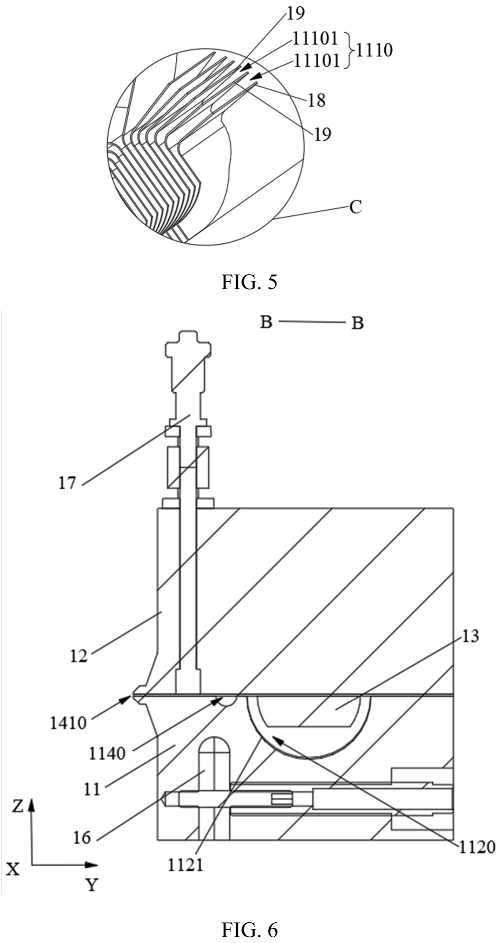

In some embodiments, as shown in FIG. 5, the coating die further includes a second distribution plate 19, the second distribution plate 19 being disposed in the flow cavity 111 and at least one second distribution plate 19 being disposed between two adjacent first distribution plates 18 to divide the distribution channel 1110 into at least two sub-distribution channels 11101.

The second distribution plate 19 may be a plate-like component disposed in the flow cavity 111, used to divide the slurry flowing therethrough. By providing at least one second distribution plate 19 between two adjacent first distribution plates 18, the distribution channel 1110 is divided into at least two sub-distribution channels 11101, and the second distribution plate 19 further divides the slurry in the distribution channel 1110 into different flow layers, enhancing the guiding effect on the slurry.

In some embodiments, the flow cavity 111 includes a first chamber 112 and a feed cavity 113 in communication with the first chamber 112, the inlet 110 being located at an end of the feed cavity 113 away from the first chamber 112, the first distribution plate 18 and the second distribution plate 19 extending from the feed cavity 113 into the first chamber 112, the inlet port 1111 being located in the feed cavity 113, and the outlet port 1112 being located in the first chamber 112.

The first chamber 112 and the feed cavity 113 may both be partial structures of the flow cavity 111, where the first chamber 112 may be a groove-like structure provided on the first die 11, used to communicate with the plurality of coating outlets 1410, and the feed cavity 113 may be a cavity structure provided in the first die 11 in communication with the first chamber 112. The inlet 110 is disposed at an outer end of the feed cavity 113 away from the first chamber 112, enabling external slurry to smoothly flow into the flow cavity 111 through the inlet 110. For example, the first chamber 112 is provided on a side of the first die 11 facing the second die 12, facilitating processing of the first chamber 112 on the first die 11.

By extending the first distribution plate 18 from the feed cavity 113 into the first chamber 112, the inlet port 1111 is located in the feed cavity 113 and the outlet port 1112 is located in the first chamber 112. Accordingly, a portion of the first distribution plate 18 is disposed in the feed cavity 113 and another portion is disposed in the first chamber 112, such that the first distribution plate 18 extends through the feed cavity 113 and the first chamber 112, resulting in a longer path for the first distribution plate 18 to act on the slurry and providing a stronger guiding effect.

In some embodiments, as shown in FIG. 6, the coating die further includes a pressure bar 13, the pressure bar 13 being connected to the second die 12 and disposed in the first chamber 112, the pressure bar 13 being spaced apart from at least a portion of an inner wall of the first chamber 112, a portion of the first distribution plate 18 extending into the first chamber 112 being disposed between the pressure bar 13 and the inner wall of the first chamber 112, a portion of a gap between the pressure bar 13 and the inner wall of the first chamber 112 forming the first distribution cavity 1120 in communication with the plurality of coating outlets 1410, and the first distribution cavity 1120 being in communication with the outlet ports 1112 of the distribution channels 1110.

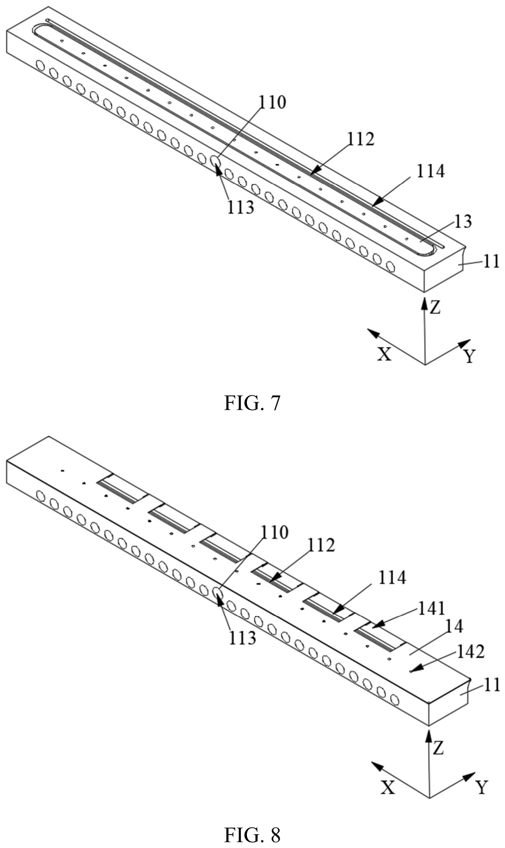

The pressure bar 13 may be a component of the coating die, connected to the second die 12 and disposed in the first chamber 112, used to form a flow path for the slurry together with the inner wall of the first chamber 112. As shown in FIG. 7, by spacing the pressure bar 13 from at least a portion of the inner wall of the first chamber 112, the gap between the pressure bar 13 and at least a portion of the inner wall of the first chamber 112 forms the first distribution cavity 1120 in communication with the plurality of coating outlets 1410. The first distribution cavity 1120 not only can communicate with the plurality of coating outlets 1410 but also can temporarily store the slurry, facilitating stabilization of the slurry pressure, making the slurry output more uniform and stable.

The portion of the first distribution plate 18 extending into the first chamber 112 is disposed between the pressure bar 13 and the inner wall of the first chamber 112, such that the outlet port 1112 of each distribution channel 1110 extends into the first distribution cavity 1120, enabling communication between the outlet port 1112 of each distribution channel 1110 and the first distribution cavity 1120.

The portion of the first distribution plate 18 extending into the first chamber 112 is configured to conform to the portion of the pressure bar 13 extending into the first chamber 112, such that the pressure bar 13, the first distribution plate 18, and the inner wall surface 1121 of the first chamber 112 can relatively tightly form the portion of the distribution channel 1110 located in the first chamber 112, reducing the possibility of slurry mixing between different distribution channels 1110. In some embodiments, a gap exists between the first distribution plate 18 and the pressure bar 13, with the gap having a length range in the third direction Z from 0.1 mm to 1 mm.

In some embodiments, the first chamber 112 and the pressure bar 13 both extend along the first direction X.

By extending both the first chamber 112 and the pressure bar 13 along the first direction X, the first distribution cavity 1120 can extend along the first direction X, enabling the first distribution cavity 1120 to conveniently communicate with the coating outlets 1410 spaced apart along the first direction X.

For example, the coating die provided in the present application may be suitable for electrode plates with a width range of 800 mm to 2000 mm, the first die 11 and the second die 12 have equal lengths in the first direction X and exceed the electrode plate size range by 100 mm to 350 mm, the first die 11 exceeds the first distribution cavity 1120 in the first direction X by a size range of 65 mm to 210 mm, and the first distribution cavity 1120 exceeds the pressure bar 13 in the first direction X by a size range of 3 mm to 25 mm.

In some embodiments, as shown in FIG. 4, the first die 11 is provided with a second chamber 114, the second chamber 114 being spaced apart from the first chamber 112, the second die 12 covering the second chamber 114 to form a second distribution cavity 1140, and the second distribution cavity 1140 being in communication with the plurality of coating outlets 1410.

The second chamber 114 may be a groove-like structure provided on the first die 11, and the second die 12 covers the second chamber 114, forming the second distribution cavity 1140 in communication with the plurality of coating outlets 1410.

For example, the second chamber 114 extends along the first direction X, enabling the second distribution cavity 1140 formed by the second chamber 114 to connect the plurality of coating outlets 1410 spaced apart along the first direction X, and the second distribution cavity 1140 can temporarily store the slurry flowing to the coating outlets 1410, facilitating a more uniform and stable slurry output.

For example, the second chamber 114 is provided on a side of the first die 11 facing the second die 12, and in a second direction Y perpendicular to the first direction X, the second chamber 114 is spaced parallel to the first chamber 112, such that when the slurry flows from the first distribution cavity 1120 into the coating outlets 1410, the slurry can flow into the second distribution cavity 1140 formed by the second chamber 114.

In some embodiments, as shown in FIG. 8, the coating die further includes a gasket 14, the gasket 14 being provided with a plurality of notches 141 spaced apart along the first direction X, the gasket 14 being sandwiched between the first die 11 and the second die 12, and all of the plurality of notches 141 being in communication with the first distribution cavity 1120 to form the coating outlets 1410.

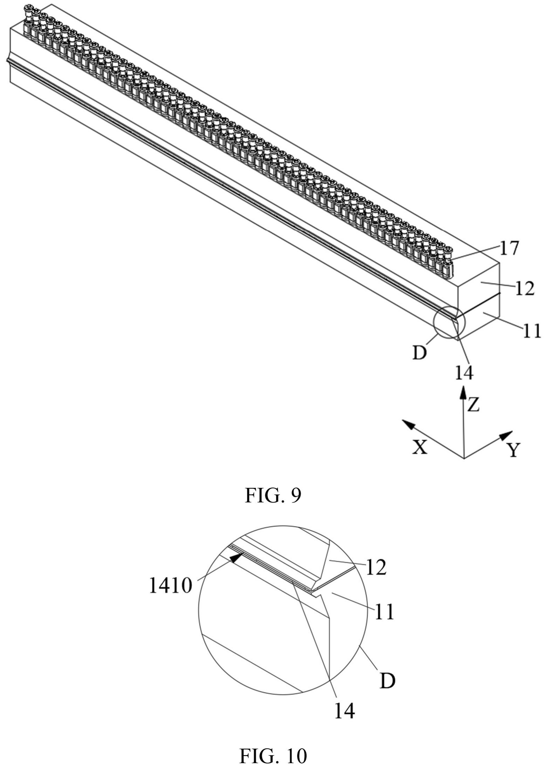

The gasket 14 may be a component used to form the plurality of coating outlets 1410. The gasket 14 is provided with a plurality of notches 141 spaced apart along the first direction X, the notches 141 penetrating through the thickness direction of the gasket 14 and communicating with an edge of the gasket 14, as shown in FIG. 9 and FIG. 10. By sandwiching the gasket 14 between the first die 11 and the second die 12 and communicating the notches 141 on the gasket 14 with the first distribution cavity 1120, the gasket 14, the first die 11, and the second die 12 can form a plurality of coating outlets 1410 in communication with the first distribution cavity 1120 and the outside, enabling the slurry in the first distribution cavity 1120 to flow out to the outside through the notches 141 for coating.

In some embodiments, the notches 141 on the gasket 14 may be formed integrally with the gasket 14 using a casting method or the like, enabling the gasket 14 with the notches 141 to be manufactured synchronously as a whole, which not only facilitates the processing and manufacturing of the gasket 14 but also ensures that the overall structure of the gasket 14 has good strength. The notches 141 may also be formed by machining methods such as milling, through processing a whole blank of the gasket 14, thereby resulting in lower processing difficulty and cost for the gasket 14.

In some embodiments, the coating die further includes a connector 15, the gasket 14 being provided with a through-hole 142 and the pressure bar 13 being fixed to the second die 12 by the connector 15 passing through the through-hole 142.

The connector 15 may be a connecting member used to connect the pressure bar 13 to the second die 12. The through-hole 142 provided on the gasket 14 may be a hole-like structure penetrating the gasket 14 through the thickness direction of the gasket 14. The pressure bar 13 being fixed to the second die 12 by the connector 15 passing through the through-hole 142 may mean that the pressure bar 13 connected to the connector 15 passes through the through-hole 142 and is connected to the second die 12 to connect the connector 15 to the second die 12.

For example, the connector 15 may be a connecting bolt, the pressure bar 13 is provided with a countersunk hole, the side of the second die 12 facing the first die 11 is provided with a threaded hole, and the connecting bolt sequentially passes through the countersunk hole and the through-hole 142 and is screwed into the threaded hole, with the pressure bar 13 connected to the second die 12, and a portion of the gasket 14 being sandwiched between the pressure bar 13 and the second die 12.

In some embodiments, the coating die further includes a first adjustment rod 16 and a second adjustment rod 17, the first adjustment rod 16 being connected to the first die 11, the second adjustment rod 17 being connected to the second die 12, and the first adjustment rod 16 and the second adjustment rod 17 being configured to adjust opening sizes of the coating outlets 1410.

The first adjustment rod 16 and the second adjustment rod 17 both refer to rod-like members used to adjust the opening sizes of the coating outlets 1410 of the coating die. The first adjustment rod 16 is connected to the first die 11, and the second adjustment rod 17 is connected to the second die 12. An operator can drive the first die 11 to move via the first adjustment rod 16 to adjust the opening sizes of the coating outlets 1410, and can drive the second die 12 to move via the second adjustment rod 17 to adjust the opening sizes of the coating outlets 1410, thereby achieving adjustment of the slurry coating weight by the coating die.

In some embodiments, a plurality of first adjustment rods 16 are provided, the plurality of first adjustment rods 16 being spaced apart along the first direction X; and a plurality of second adjustment rods 17 are provided, the plurality of second adjustment rods 17 being spaced apart along the first direction X.

By providing a plurality of first adjustment rods 16 spaced equally along the first direction X on the first die 11, an operator can independently adjust each of the opening sizes of the plurality of coating outlets 1410 spaced apart along the first direction X via the plurality of first adjustment rods 16, allowing flexible adjustment of the slurry coating weight by the coating outlets 1410. By providing a plurality of second adjustment rods 17 spaced equally along the first direction X on the second die 12, an operator can independently adjust each of the opening sizes of the plurality of coating outlets 1410 spaced apart along the first direction X via the plurality of second adjustment rods 17, allowing flexible adjustment of the slurry coating weight by the coating outlets 1410.

In some embodiments, the coating die includes a first die 11, a second die 12, a pressure bar 13, a gasket 14, a first adjustment rod 16, and a second adjustment rod 17, the first die 11 being provided with a feed cavity 113 having an inlet 110, and a first chamber 112 and a second chamber 114 extending along the first direction X, the feed cavity 113 being in communication with the first chamber 112, the first chamber 112 and the second chamber 114 being spaced apart, the gasket 14 being provided with a plurality of notches 141 spaced apart along the first direction X, the gasket 14 being sandwiched between the first die 11 and the second die 12, the notches 141 of the gasket 14 forming coating outlets 1410 with the first die 11 and the second die 12, the pressure bar 13 being connected to the second die 12 and disposed in the first chamber 112, and the pressure bar 13 and an inner wall surface 1121 of the first chamber 112 forming a first distribution cavity 1120 in communication with the plurality of coating outlets 1410.

The plurality of spaced first distribution plates 18 in the coating die extend from the feed cavity 113 into the first chamber 112 to form a plurality of distribution channels 1110, the cross-sectional areas of the inlet ports 1111 of the plurality of distribution channels 1110 are set to be equal and the outlet port 1112 of each distribution channel 1110 corresponds to a respective coating outlet 1410, and the second distribution plate 19 disposed in the distribution channel 1110 can divide each distribution channel 1110 into two sub-distribution channels 11101, enabling the slurry to be better guided to the coating outlets 1410.

Some embodiments of the present application further provide an electrode plate coating device, the coating device including the coating die provided in the above technical solutions, and the coating die being configured to coat slurry onto a surface of the electrode plate.

Since the electrode plate coating device includes the coating die provided in the above technical solutions, the electrode plate coating device can improve the uniformity of slurry coating in the coating process.

Finally, it should be noted that the above embodiments are only used to illustrate the technical solutions of the present application and not to limit them. Although the present application has been described in detail with reference to the foregoing embodiments, those of ordinary skill in the art should understand that they can still modify the technical solutions described in the foregoing embodiments or equivalently replace some or all of the technical features thereof; and these modifications or replacements do not cause the essence of the corresponding technical solutions to depart from the scope of the technical solutions of the embodiments of the present application, and they should all be included within the scope of the claims and description of the present application. In particular, as long as there is no structural conflict, the various technical features mentioned in the embodiments can be combined in any manner. The present application is not limited to the specific embodiments disclosed herein but includes all technical solutions falling within the scope of the claims.

## Claims

1. A coating die, wherein the coating die is provided with an inlet, a first distribution cavity, a plurality of distribution channels, and a plurality of coating outlets, the plurality of coating outlets being spaced apart along a first direction;
each distribution channel is provided with an inlet port and an outlet port at two respective ends thereof, the inlet port being in communication with the inlet and each outlet port being oriented toward a corresponding coating outlet and in communication with the corresponding coating outlet through the first distribution cavity; and
cross-sectional areas of all the inlet ports of the plurality of distribution channels are equal.

2. The coating die according to claim 1, wherein the distribution channel comprises at least two sub-distribution channels, cross-sectional areas of all of the at least two sub-distribution channels at the inlet port being equal.

3. The coating die according to claim 2, wherein the coating die comprises a first die, a second die, and a plurality of first distribution plates, the first die being provided with a flow cavity in communication with the inlet, the second die covering the flow cavity, and the plurality of first distribution plates being spaced apart in the flow cavity to form the distribution channels in communication with the coating outlets.

4. The coating die according to claim 3, wherein the coating die further comprises a second distribution plate, the second distribution plate being disposed in the flow cavity and at least one second distribution plate being disposed between two adjacent first distribution plates to divide the distribution channel into at least two sub-distribution channels.

5. The coating die according to claim 3 or 4, wherein the flow cavity comprises a first chamber and a feed cavity in communication with the first chamber, the inlet being located at an end of the feed cavity away from the first chamber, the first distribution plate extending from the feed cavity into the first chamber, the inlet port being located in the feed cavity, and the outlet port being located in the first chamber.

6. The coating die according to claim 5, wherein the coating die further comprises a pressure bar, the pressure bar being connected to the second die and disposed in the first chamber, the pressure bar being spaced apart from at least a portion of an inner wall of the first chamber, a portion of the first distribution plate extending into the first chamber being disposed between the pressure bar and the inner wall of the first chamber, a portion of a gap between the pressure bar and the inner wall of the first chamber forming the first distribution cavity in communication with the plurality of coating outlets, and the first distribution cavity being in communication with the outlet ports of the distribution channels.

7. The coating die according to claim 5 or 6, wherein the first die is provided with a second chamber, the second chamber being spaced apart from the first chamber, the second die covering the second chamber to form a second distribution cavity, and the second distribution cavity being in communication with the plurality of coating outlets.

8. The coating die according to any one of claims 3 to 7, wherein the coating die further comprises a first adjustment rod and a second adjustment rod, the first adjustment rod being connected to the first die, the second adjustment rod being connected to the second die, and the first adjustment rod and the second adjustment rod being configured to adjust opening sizes of the coating outlets.

9. The coating die according to claim 6, wherein the coating die further comprises a gasket, the gasket being provided with a plurality of notches spaced apart along the first direction, the gasket being sandwiched between the first die and the second die, and all of the plurality of notches being in communication with the first distribution cavity to form the coating outlets.

10. The coating die according to claim 6, wherein the first chamber and the pressure bar both extend along the first direction.

11. The coating die according to claim 8, wherein a plurality of first adjustment rods are provided, the plurality of first adjustment rods being spaced apart along the first direction; and a plurality of second adjustment rods are provided, the plurality of second adjustment rods being spaced apart along the first direction.

12. The coating die according to claim 9, wherein the coating die further comprises a connector, the gasket being provided with a through-hole and the pressure bar being fixed to the second die by the connector passing through the through-hole.

13. An electrode plate coating device, comprising the coating die according to any one of claims 1 to 12, wherein the coating die is configured to coat slurry onto a surface of an electrode plate.
